# EUROPEAN PATENT APPLICATION

(11) **EP 1 254 966 A2**
(43) Date of publication of application: **06.11.2002**
(21) Application number: 02252955.6
(22) Date of filing: 26.04.2002
(51) Int. Cl.: C22F 1/10, G02C 5/02

(54) **Forming a shape memory alloy component**

(30) Priority: 01.05.2001 GB 0110647
(71) Applicant: Accademie Friulane S.R.L., 32040 Valle di Cadore (BL) (IT)
(72) Inventor: Liera, Adelchi, 32100 Belluno (IT)
(74) Representative: McDonough, Jonathan

(57) **Abstract**

A method of forming a component which is made from a shape memory alloy, exhibiting enhanced elastic properties, involves heating a forming die to a temperature which is greater than the M_{d} temperature of the alloy, the forming die comprising at least two parts with respective forming surfaces which can receive a component which is to be formed between them. The shape memory alloy component is placed between the forming surfaces of the two parts of the forming die, the alloy having been treated so that it exhibits enhanced elastic properties. The parts of the forming die are then closed after the temperature of the component has increased to at least the M_{d} temperature of the alloy, to cause the forming surfaces of the die parts to contact the shape memory alloy component and to form it into a desired configuration.

## Description

This invention relates to a method of forming a component which is made from a shape memory alloy, exhibiting enhanced elastic properties.

Enhanced elastic properties are available from shape memory alloys as a result of a transformation between martensite and austenite phases of the alloys. The nature of the superelastic transformations of shape memory alloys is discussed in "Engineering Aspects of Shape Memory Alloys", T W Duerig et al, on page 370, Butterworth-Heinemann (1990). Subject matter disclosed in that document is incorporated in this specification by this reference to the document. A principal transformation of shape memory alloys involves an initial increase in strain, approximately linearly with stress. This behaviour is reversible, and corresponds to conventional elastic deformation. Subsequent increases in strain are accompanied by relatively small increases in stress, over a limited range of strain to the end of the "loading plateau". The loading plateau stress is defined by the positive inflection point on the loading portion of the stress/strain graph. Subsequent increases in strain are accompanied by larger increases in stress. On unloading, there is a decline in stress with reducing strain to the start of the "unloading plateau" evidenced by the existence of an inflection point along which stress changes little with reducing strain. At the end of the unloading plateau, stress reduces with approximately linear reducing strain. The unloading plateau stress is also defined by the inflection point on the stress/strain graph. Any residual strain after unloading to zero stress is either largely recoverable on heating or permanent set of the sample. Characteristics of this deformation, the loading plateau, the unloading plateau, the elastic modulus, the plateau length and the permanent set (defined with respect to a specific total deformation) are established, and are defined in, for example, "Engineering Aspects of Shape Memory Alloys", on page 376.

Non-linear superelastic properties can be introduced in a shape memory alloy by a process which involves cold working the alloy for example by a process that involves pressing, swaging or drawing. The cold working step can be followed by an annealing step while the component is restrained in the configuration, resulting from the cold working step at a temperature that is sufficiently high to cause dislocations introduced by the cold working to combine, resulting in a more uniform dislocation distribution. This can ensure that the deformation introduced by the cold work is retained.

By an appropriate combination of working and heat treatment steps, the elastic properties of a shape memory alloy can exhibit characteristics which include features of both linear and non-linear superelastic properties.

The enhanced elastic properties of shape memory alloys makes them suitable for use in the manufacture of spectacle (or eyeglass) frames. Frames made from these material are able to withstand deformation without permanent damage. In particular, the temples, the nose bridge, or the nose pad connector wires of a pair of spectacles can be bent and will then spring back to their original configuration. A process for treating a shape memory alloy so that its enhanced elastic properties are suitable for use in spectacle frames is disclosed in US-4772112. The process involves a final working step which involves cold working to achieve at least 20% plastic deformation beyond the elastic limit of the alloy. The cold working step can be followed by a heat treatment step, in which the configuration of the component is fixed by an appropriate constraint. The heat treatment step has the effect of reducing the yield strength of the alloy. Cold working can be achieved by techniques such as pressing and swaging. The deformation is carried out at a temperature which is less than the characteristic A_{f} and M_{d} temperatures of the alloy, which are, respectively, (a) the temperature at which the thermally induced change in phase from martensite to austenite is completed, and (b) the maximum temperature at which the phase transition from austenite to martensite can be induced by the application of stress. The M_{d} temperature is greater than the A_{f} temperature. The properties resulting from the process disclosed in US-4772112 process are referred to as "optimized elastic", and are claimed to extend the temperature range over which elasticity is observed, making nickel titanium alloys more useful in the construction of eyeglass frames.

The use of a cold working step to confer preferred elastic properties on a shape memory alloy component has the disadvantage that, on removal of the forming stress, the component will tend to spring back partially towards the deformation prior to the application of stress. This can make it difficult to manufacture parts whose configurations are accurately controlled, especially in the case of certain nickel titanium alloys after only small deformations, for example by as little as 0.5% strain.

The present invention provides a method of forming a component which is made from a shape memory alloy, which involves pressing the component between die parts which are heated to a temperature which is greater than the M_{d} temperature of the alloy.

Accordingly, in one aspect, the invention provides a method of forming a component which is made from a shape memory alloy, exhibiting enhanced elastic properties, which comprises:
a. heating a forming die to a temperature which is greater than the M_{d} temperature of the alloy, the forming die comprising at least two parts with respective forming surfaces which can receive a component which is to be formed between them,
b. placing the shape memory alloy component between the forming surfaces of the two parts of the forming die, the alloy having been treated so that it exhibits enhanced elastic properties, and
c. closing the parts of the forming die after the temperature of the component has increased to at least the M_{d} temperature of the alloy, to cause the forming surfaces of the die parts to contact the shape memory alloy component and to form it into a desired configuration.

The method of the invention has the advantage that it enables components to be made from a shape memory alloy with a configuration which is capable of being controlled with greater precision than with a process in which the temperature in the working step is low. This is possible because the tendency of the component to spring back towards the configuration prior to the deformation is at least partially inhibited. A component can be manufactured in a desired configuration using a die which is machined to deform the component specifically to about that configuration.

Furthermore, it has been found that a component that has been formed using the method of the present invention can display desirable enhanced elasticity properties, and this is possible without long heat treatment steps after working the component into a desired configuration (as disclosed in US-4772112). The desirable elastic properties include a high yield stress (for example exceeding about 200 MPa (about 30 ksi), preferably exceeding about 350 MPa (about 50 ksi)). Preferably, the desirable elastic properties are displayed over a temperature which extends down to at least as low as -10°C, preferably at least as low as -20°C, and which extends up to at least 35°C, preferably at least 40°C.

Preferably, the temperature to which the forming die is heated exceeds the M_{d} temperature of the alloy by at least about 100°C, preferably at least about 200°C, especially at least about 250°C. For example, when the M_{d} temperature of the alloy is from about 145 °C to about 175°C (as can be the case for suitable NiTi binary alloys containing from 50.5 to 52 at-% Ni), the temperature of the die is preferably at least about 250°C, more preferably at least about 350°C, for example at least about 400°C. Heating the dies to elevated temperature has the advantage that the shape memory alloy component is heated to a temperature greater than M_{d} more quickly, and is exposed to elevated temperature for a shorter period. It is generally desirable for the period of exposure of the alloy to elevated temperature to be minimised in order to minimise the reduction of the ultimate tensile strength of the alloy. A reduction in the ultimate tensile strength of the alloy has the highly undesirable effect of reducing the temperature range over which operable elasticity is observed. Accordingly, heating the dies prior to pressing has the advantage of extending the operable elastic temperature range of the component.

Preferably, the temperature of the component is allowed to increase before the die parts are brought together so that the forming surfaces contact the component. Preferably, the temperature is allowed to increase to at least the M_{d} temperature of the alloy. When the temperature to which the die is heated is greater than the M_{d} temperature, it is preferred that the temperature of the alloy is allowed to increase to a temperature approaching that to which the die is heated. It will be appreciated that the temperature of the component will increase more quickly if the temperature of the die is kept high. It will generally be appropriate for the component to be left in contact with one of the parts of the forming die for at least about 10 s, preferably at least about 15 s, for example at least about 20 s, prior to closing the die parts about the component, to allow the temperature of the alloy to increase towards that of the die. It will be preferred for the time in contact with the die part to be kept below about 30 s if possible. The time that is necessary in contact with the die part will depend on factors such as the temperature of the die part and the thermal mass of the component.

Preferably, the die parts are kept closed about the component, to form it into a desired configuration, for at least about 10 s, more preferably at least about 20 s, for example at least about 30 s. The forming time will preferably be sufficiently long for the temperature of the component to approach that of the die, or preferably to be approximately equal to the temperature of the die.

It will generally be appropriate for the temperature of the die to be controlled so that the temperature of the alloy during the forming step does not exceed the solvus temperature at which nickel-rich precipitates will be dissolved. A given percentage of such precipitates are necessary to enable accurate control of the transformation of the alloy, and the forming temperature should not significantly change (through either dissolution or further precipitation) the transformation of the starting material. Excessive heating can also be undesirable because it can lead to recovery and recrystallization, so that the elastic properties of the alloy are affected adversely and possible destroyed. For many nickel based shape memory alloys, the temperature to which the dies are heated will generally be less than about 650°C, preferably less than about 500°C.

Preferably, each of the die parts is heated. This can facilitate rapid heating of the component.

The or each die part that is heated can be heated by means of heating elements that are provided within the die part. For example, when the die part is heated using an electrically powered resistive heater, one or more such heaters can be provided within one or more of the die parts. It might be appropriate for a layer of insulating material to be provided on the face of one or each of the die parts which faces the other die part. The insulating material should be capable of withstanding the temperatures and pressures to which the die parts are exposed when in use. Suitable materials might include certain ceramic materials.

The technique provided by the present invention finds particular application in the manufacture of components for spectacle frames. For example, it can be used to manufacture components such as temples and nose bridges. It finds particular application in the manufacture of nose bridge components which generally require an accurate shape, and are formed primarily formed through simple bending, with maximum strains of less than 15%.

Preferably, the shape memory alloy component has an elongate configuration with a substantially constant cross-section over at least part of its length. Such a component can be particularly well suited to use as a component of a spectacle frame. It will particularly be preferred for the component to be in the form of a length of wire. The cross-section of the wire might be, for example, generally rounded such as circular, or generally rectangular such as square.

Preferably, the deformation of the component when the die parts are closed is essentially a bending deformation. However the deformation of the component can include swaging, stretching and other characteristics, generally in combination with bending but possibly without any accompanying bending deformation. When the deformation of the component includes a bending deformation, it will generally be preferred for the deformation to involve not more than about 20% deformation, measured in terms of outer fibre strain. The deformation will generally be at least about 5% deformation, preferably at least about 10% deformation, at least over a part of the length of the component.

Suitable shape memory alloys for use in the method of the invention include nickel titanium based alloys. Binary alloys, such as those in which the nickel content is at least about 50 at-%, preferably at least about 50.5 at-%, are particularly preferred. The nickel content will usefully be less than about 52 at-%, preferably less than about 51 at-%. The device can be formed from other Ni-Ti based alloys, including alloys with ternary and quaternary additions. Examples of elements that can be incorporated in the alloy include Fe, Co, Cr, Al, Cu and V. Added elements can be present in amounts up to about 10 at-%, preferably up to about 5 at-%. The method is preferably used on material which is not fully annealed, for example on wire that has been previously cold drawn 30 to 50% in length and then annealed while straight at such a temperature so as to produce an A_{f} temperature of between -30°C and 15°C.

The present invention will now be described by way of example with reference to the accompanying drawings, in which:
Figure 1 is an isometric view of a pair of spectacles of which components can b manufactured using the method of the present invention.
Figure 2 is an enlarged view of the nose bridge component of the pair spectacles shown in Figure 1.
Figure 3 is a schematic view of apparatus which can be used to implement the method of the invention to make the nose bridge component of the spectacle frame shown in Figure 1.

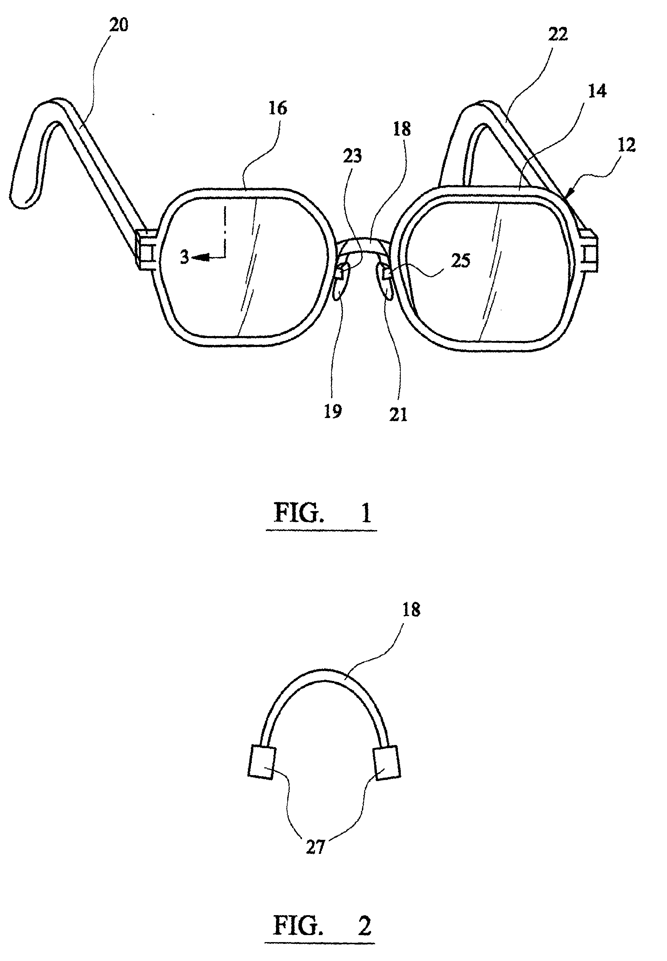

Referring to the drawings, Figure 1 shows a frame 12 for a pair of spectacles which comprises lens rims 14, 16, a nose bridge 18, nose pads 19, 21, and temples 20, 22. The nose pads are connected to the lens rims by means of wires 23, 25. Each of the temples is connected to a respective lens rim by means of a hinged connector, and extends backwardly from its lens rim, over a user's ear when the nose pads are positioned on the user's nose.

As shown in Figure 2, the nose bridge 18 consists of a wire with a round cross-section. Its ends are fitted into hollow chucks 27 by which the component is fitted to the lens rims. The ends are fitted into the chucks by means of adhesive.

It can be preferred for the nose bridge and temples at least of a spectacle frame to have enhanced elastic properties so that it can be deformed significantly (for example by at least 4%, preferably at least about 6%), and therefore to be made by the method of the present invention. This is particularly appropriate for the nose bridge component which should desirably be formed with an appropriate configuration to fit over a user's nose. It is an advantage of the method of the present invention which enables a component to be formed accurately into a complex configuration such as that of a curved nose bridge component.

The temples and nose bridge components of the spectacle frame are formed from a binary nickel-titanium shape memory alloy which contains 50.6 at-% nickel.

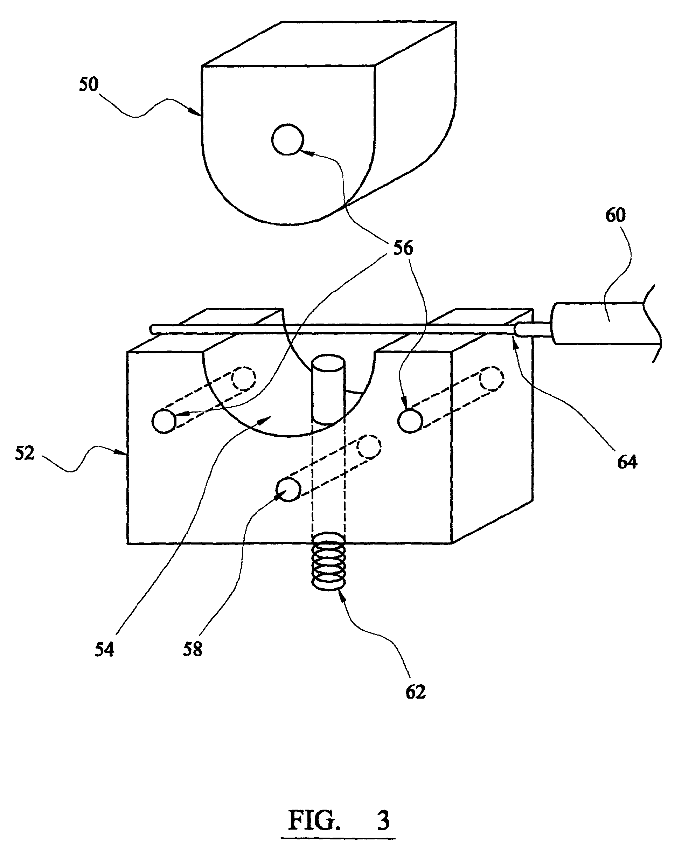

Figure 3 shows apparatus for implementing the method of the invention. The apparatus includes a forming die which comprises upper and lower parts 50, 52. The lower part 52 has a groove 54 extending along its length whose shape approximates to that of a part of a circle and which defines the concave forming surface. The upper part 50 has a convex forming surface, corresponding in shape to the groove 54 in the lower part 52.

The lower part 52 of the forming die has two heating elements 56 within it and the upper part 54 has a single heating element within it. The heating elements are conventional electrical resistive heaters. A thermocouple 58 is located within the lower part to enable the temperature of the forming die to be controlled. It will be appreciated that other arrangements of heating elements and control features can be employed.

The upper die part 50 can be lowered and raised relative to the lower die part 52. Its position can be precisely controlled to ensure that the die parts are aligned properly. A spring 62 can be used on to control the closing force between the die parts.

The apparatus a includes driver 60 for moving workpieces 64 into and subsequently out of the forming die. Drivers can be driven using appropriate actuators, for example using electric motors or hydraulic or pneumatic drivers.

In use, the forming die parts 50, 52 are heated to a temperature of about 480°C. A workpiece 64 is positioned on the lower die part by means of one of the driver 60 which holds the workpiece appropriately relative to the forming surface. The workpiece is allowed to heat up caused by conduction from the die part, for example for about 10 seconds, until the temperature of the alloy of the workpiece is greater than the M_{d} temperature of the alloy, and preferably is close to the temperature to which the forming die parts have been heated.

The upper die part 50 is lowered towards the lower die part 52 to form the workpiece between the respective forming surfaces. The closing force by which the workpiece is deformed between the die parts is controlled by a spring in the die closing mechanism. The workpiece is left between the closed die parts for about 40 seconds before the upper die part is lifted. The workpiece is then removed from the die and quenched in cold water.

A workpiece which is intended to be used as the nose bridge component of a pair of spectacles, can comprise a length of wire of circular cross-section, diameter 1.3 mm, and length 33.3 mm. The forming surfaces of the die define an arcuate shape for the nose bridge component which has a radius of 78.5 mm. The radius of the component after forming and quenching is about 79 mm.

## Claims

1. A method of forming a component which is made from a shape memory alloy, exhibiting enhanced elastic properties, which comprises:
a. heating a forming die to a temperature which is greater than the M_{d} temperature of the alloy, the forming die comprising at least two parts with respective forming surfaces which can receive a component which is to be formed between them,
b. placing the shape memory alloy component between the forming surfaces of the two parts of the forming die, the alloy having been treated so that it exhibits enhanced elastic properties, and
c. closing the parts of the forming die after the temperature of the component has increased to at least the M_{d} temperature of the alloy, to cause the forming surfaces of the die parts to contact the shape memory alloy component and to form it into a desired configuration.

2. A method as claimed in claim 1, in which the temperature to which the forming die is heated exceeds the M_{d} temperature of the alloy by at least about 50°C, preferably at least about 80°C.

3. A method as claimed in claim 1, in which the shape memory alloy component has an elongate configuration with a substantially constant cross-section over at least part of its length.

4. A method as claimed in claim 1, in which the deformation of the component when the die parts are closed is essentially a bending deformation.

5. A method as claimed in claim 4, in which the bending deformation of the component is not more than about 20%.

6. A method as claimed in claim 1, in which the alloy is a nickel-titanium based alloy, which comprises at least about 50 at-% nickel.

7. A method as claimed in claim 1, in which each of the die parts is heated.
